(19) Europäisches Patentamt

European Patent Office

Office européen des brevets

(11) **EP 1 921 297 B1**

(12) **EUROPÄISCHE PATENTSCHRIFT**

(45) Veröffentlichungstag und Bekanntmachung des Hinweises auf die Patenterteilung:
**02.12.2009 Patentblatt 2009/49**

(51) Int Cl.:
*F02D 41/14* (2006.01)   *G01M 15/04* (2006.01)

(21) Anmeldenummer: **07020117.3**

(22) Anmeldetag: **15.10.2007**

(54) **Verfahren zum bestimmen des Zylinderdrucks einer Brennkraftmaschine**

Method for determining the cylinder pressure in a combustion engine

Procédé destiné à la détermination de la pression de cylindre d'un moteur à combustion interne

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **08.11.2006 DE 102006053255**

(43) Veröffentlichungstag der Anmeldung:
**14.05.2008 Patentblatt 2008/20**

(73) Patentinhaber: **IAV GmbH
Ingenieurgesellschaft Auto und Verkehr
10587 Berlin (DE)**

(72) Erfinder:
- **Köller, Malte
  18311 Ribnitz-Damgarten (DE)**
- **Lezius, Ulf
  38518 Gifhorn (DE)**
- **Magnor, Olaf, Dr.-Ing.
  38104 Braunschweig (DE)**
- **Schnaubelt, Michael
  38518 Gifhorn (DE)**
- **Schultalbers, Matthias
  38536 Meinersen (DE)**

(74) Vertreter: **Buss, Fritz Gerd
IAV GmbH
Ingenieurgesellschaft Auto und Verkehr
Kauffahrtei 25
09120 Chemnitz (DE)**

(56) Entgegenhaltungen:
EP-A- 1 582 717       DE-A1- 10 340 439
US-B1- 6 336 070

**Beschreibung**

Die Erfindung betrifft ein Verfahren zum Bestimmen des Zylinderinnendrucks einer Brennkraftmaschine nach dem Oberbegriff des Patentanspruches 1.

Zur Beurteilung eines Brennverfahrens ist der Zylinderinnendruck eine entscheidende Größe. Dies gilt gleichfalls für Verbrennungsverfahren, bei welchen ein homogen vorgemischtes Kraftstoff- Gasgemisch durch Selbstzündung entzündet wird. Diese Brennverfahren werden häufig als HCCI (Homogeneos Charge Compression Ignition), homogene Kompressionszündung, homogene Selbstzündung oder beispielhaft für Benzin als Brennstoff der homogenen Kompressionszündung als CAI- Controlled Auto Ignition bezeichnet. Um eine homogene Kompressionszündung zu erzielen, muss ein ausreichend hohes Energieniveau im Zylinder vorliegen. Dies kann beispielsweise durch einen hohen Verdichtungsdruck und/oder durch eine ausreichende Menge heißen Restgases hervorgerufen werden. Die Steuerung der die Selbstzündung beeinflussenden Parameter wie Verdichtung, Abgasrückführrate, Einspritzzeitpunkt, Kraftstoffverteilung, Luftfüllung etc. ist sehr komplex. Einstellgrößen können hierbei beispielsweise die Ansteuerung von Ein- bzw. Auslassventilen der Brennkraftmaschine sein, welche hinsichtlich ihres Hubes und ihrer Ansteuerzeit variabel gesteuert werden können. Mittels variabler Ansteuerzeiten lassen sich sowohl die Kompression als auch die AGR-Rate bei interner Abgasrückführung beeinflussen. Weitere Einflussparameter können die Stellung eines AGR-Ventils, ein einstellbares Verdichtungsverhältnis oder die Einspritzparameter sein. Die Betriebsart homogener Selbstzündung ist dabei nicht in allen Betriebspunkten darstellbar, vielmehr sind diese meist auf den Bereich der Teillast begrenzt. Die Verfahrensführung ist insbesondere in den Randbereichen und bei dynamischen Betriebsübergängen schwierig. Aufgrund der Abmagerung bei homogener Selbstzündung ist das abgebbare Drehmoment begrenzt und es besteht die Gefahr von Verbrennungsaussetzern. Eine Anfettung des Gemisches zur Steigerung des abgegebenen Drehmoments führt aus dem Bereich homogener Selbstzündung heraus. Problematisch ist weiterhin, dass an der Fettgrenze des Verfahrens ein rasanter Anstieg des Zylinderdruckgradienten zu erkennen ist, der mechanische Beschädigungen der Brennkraftmschine hervorrufen kann. Weiterhin hat ein starker Zylinderdruckgradient Auswirkungen auf die Akustik der Brennkraftmaschine. Eine Beobachtung des Zylinderinnendrucks ist daher insbesondere für die Steuerung einer mit homogener Selbstzündung betriebenen Brennkraftmaschine aus Sicherheitsaspekten notwendig und bietet sich weiterhin zur Überwachung und Steuerung des Brennverfahrens an.

Eine direkte Messung des Zylinderinnendrucks kann mittels zusätzlicher Sensorik erfolgen, wobei Zylinderdrucksensoren für Serienanwendungen aufwändig und teuer sind. Messeinrichtungen zur direkten Messung des Zylinderdruckes werden daher in Serienfahrzeugen nicht verbaut. Es ergibt sich hieraus die Notwendigkeit, den Zylinderinnendruck aus anderen, leicht messbaren oder im Steuergerät bereits verfügbaren Größen zu berechnen. Einen Ansatz zur Berechnung des Zylinderinnendrucks bietet die Drehungleichförmigkeit der Kurbelwelle, welche über die Messung der Drehzahlunterschiede und der abgeleiteten Winkelgeschwindigkeit und Winkelbeschleunigung an der der Kurbelwelle, von dem in Serienfahrzeugen verbauten Winkelmarkengeber, gemessen werden kann.

Vorbekannt ist aus der DE 44 45 684 A1 ein Verfahren zur Ermittlung des Drehmomentes an Verbrennungskraftmaschinen. Ausgehend von der genauen Messung der Winkelgeschwindigkeit bzw. Winkelbeschleunigung wird über die Drehmomentenbilanz an der Kurbelwelle das abgegebene Drehmoment ermittelt. Die Ermittlung des Drehmomentes erfolgt dabei unter vereinfachten Bedingungen. Vorbekannt ist weiterhin aus der DE 199 31 985 A1 ein Verfahren zum Bestimmen des indizierten Drehmomentes aus der Winkelgeschwindigkeit bzw. Beschleunigung der Kurbelwelle und Bestimmung der Drehmomentsumme aus dem freien Drehmoment und dem Massendrehmoment der oszillierenden Massen. Weiterhin vorbekannt ist aus der DE 102 56 106 A1, zur Verbesserung der Genauigkeit der Berechnung des Drehmomentes eine Kompensation des Geberradfehlers bzw. des Einflusses des Ladedruckes vorzunehmen.

Vorbekannt ist aus der WO 93/22648 A1 die Ermittlung des Drehmomentes aus der Winkelgeschwindigkeitsmessung, wobei interne Drehschwingungen des Antriebsstranges als elastisch verbundene Einzelmassen modelliert werden können, was die Messung der jeweiligen Winkelgeschwindigkeiten der Einzelmassen notwendig macht. Diese ist im Antriebsstrang jedoch nur mit zusätzlicher Sensorik möglich.

Aufgabe der Erfindung ist es, ein Verfahren zur Bestimmung des Zylinderinnendrucks einer Brennkraftmaschine anzugeben, was hinsichtlich der Berechnung sehr genau ist.

Diese Aufgabe wird bei gattungsgemäßen Verfahren erfindungsgemäß durch die kennzeichnenden Merkmale des Patentanspruches 1 gelöst.

Erfindungsgemäß vorteilhaft erfolgt die Bestimmung des Zylinderinnendrucks einer Brennkraftmaschine aus einem Brennraumdruckmodell und einem Druckkorrekturwert, der aus dem Vergleich des über den Zylinderdruck gebildeten Gaswechselmoments an der Kurbelwelle und einem über die gemessenen Werte der Winkelgeschwindigkeit $\dot{\varphi}_{KW,mess}$ sowie Winkelbeschleunigung $\ddot{\varphi}_{KW,mess}$, und berechneten Gaswechselmoment gebildet wird. Erfindungsgemäß vorteilhaft wird der modellierte Wert des Zylinderinnendrucks aus einem Druckmodell als Vorsteuerwert gewonnen und mit einem aus der Drehungleichförmigkeit und damit aus realen Messwerten gebildeten Korrekturwert korrigiert. Basis des Vergleichs ist das Gaswechselmoment. Dieses wird einmal aus dem am Kolben angreifenden und aus der Verbrennung herrührenden Druck über das Druckmodell und ein nachfolgendes Kurbeltriebsmodell berechnet. Parallel wird aus den Drehungleichförmigkeitsmesswerten der Wechselanteil des Gasmomentes berechnet und mit dem aus dem Druckmodell stammenden Werten verglichen. Erfindungsgemäß vorteilhaft wird die Differenz der aus den auf unterschiedlichen Eingangsgrößen gebildeten Wechselanteil zur Korrektur des Druckwertes aus dem Druckmodell verwendet. Dies kann in vorteilhafter Weise mittels einer Beobachterstruktur erfolgen, welche ein inverses Druckmodell des Brennraums beinhaltet.

In vorteilhafter Weise wird der ermittelte Brennraumdruck zur Brennverfahrenssteuerung genutzt. Starke, die Brennkraftmaschine schädigende Druckgradienten können dabei vermieden werden, weiterhin ist eine Begrenzung aus Akustikgründen notwendig. Der Brennraumdruck ist weiterhin ein Parameter für eine Betriebsartenumschaltung in eine konventionelle Betriebsart, beispielsweise für mit Benzin betriebene Maschinen in eine Betriebsart mit Selbstzündung.

Es wird damit eine Möglichkeit geschaffen, aus den Steuergerätegrößen ohne direkte Druckmessung den Zylinderinnendruck zu berechnen, wobei lediglich bereits in Serienfahrzeugen bzw. in deren Steuergeräten vorliegende Messgrößen genutzt werden.

Die Erfindung wird nachfolgend anhand eines Ausführungsbeispiels näher beschrieben. Vorteilhafte Wirkungen ergeben sich weiterhin aus den Unteransprüchen.

Die Ermittlung des Gaswechselmomentes einer Brennkraftmaschine, also des Anteils der von der Verbrennung herrührenden Druckschwankungen ist indirekt aus der Bewegung der Kurbelwelle möglich. Im Serienfahrzeug verbaut ist eine Sensorik, bei welcher meist über Geberräder mit einer Vielzahl von Inkrementen, die von einem Sensor abgetastet werden, eine Messung der Kurbelwinkellage $\varphi_{KW}$ erfolgt und deren Bewegungsdaten über den Zeitverlauf - Winkelgeschwindigkeit $\dot{\varphi}$ bzw. Winkelbeschleunigung $\ddot{\varphi}$ - mit den Messwerten $\dot{\varphi}_{KW,\ mess}$ und $\ddot{\varphi}_{KW,mess}$ gemessen werden.

Das Drehmoment lässt sich dabei, wie in der Veröffentlichung "Drehmomentenbestimmung bei Verbrennungsmotoren durch Auswertung der Kurbelwellengeschwindigkeit" von Fehrenbach, W. Held und F. Zuther in MTZ Motorentechnische Zeitschrift 05/1998 beschrieben, auf der Grundlage der Winkelgeschwindigkeit bestimmen. Die Berechnung basiert auf der Drehmomentenbilanz an der Kurbelwelle

$$J \cdot \ddot{\varphi}_{KW} + \frac{1}{2}\frac{dJ(\varphi)}{d\varphi} \cdot \dot{\varphi}_{KW}{}^2 = \overline{M}_G - \tilde{M}_G - \overline{M}_R - \overline{M}_L \qquad Gl.(1)$$

wobei:

- J das Trägheitsmoment des Kurbeltriebes,

- $\dfrac{dJ(\varphi)}{d\varphi}$ die erste Ableitung des Trägheitsmomentes nach dem Kurbelwinkel,

- $\dot{\varphi}_{KW}$ die Winkelgeschwindigkeit an der Kurbelwelle,
- $\ddot{\varphi}_{KW}$ die Winkelbeschleunigung der Kurbelwelle,
- $\overline{M}_G$ der Gleichanteil des Gasmomentes,
- $\overline{M}_R$ das Reibungsdrehmoment,
- $\overline{M}_L$ das Lastmoment an der Kurbelwelle,
- $\tilde{M}_G$ der Wechselanteil des Gasdrehmomentes ist.

Die Winkelgeschwindigkeit $\dot{\varphi}$ bzw. Winkelbeschleunigung $\ddot{\varphi}$ sind auf der Grundlage der Messung an der Kurbelwelle messbar, wobei die Messwerte nachfolgend mit dem Indize "mess" ($\dot{\varphi}_{KW,mess}$ $\ddot{\varphi}_{KW,mess}$ etc.) bezeichnet werden. Im stationären Fall, bei dem Last und Drehzahl konstant sind, sind die Gleichanteile des Gasmomentes $\overline{M}_G$ und die Gleichanteile des Reibungsdrehmomentes $\overline{M}_R$ und des Lastmomentes an der Kurbelwelle $\overline{M}_L$ im Gleichgewicht, so dass sich Gleichung (1) vereinfacht und sich der Wechselanteil des Gasmomentes zu

$$\tilde{M}_G = J(\varphi) \cdot \ddot{\varphi}_{KW,mess} + \frac{1}{2}\frac{dJ(\varphi)}{d\varphi} \cdot \dot{\varphi}_{KW,mess}{}^2 \qquad Gl.(2)$$

ergibt. Der Verlauf des Wechselanteils des Gasmomentes ist dabei kennzeichnend für das abgegebene Drehmoment und damit den durch die Verbrennung herrührenden Zylinderdruck. Dem Antriebsstrang überlagerte Summe der externe Wechselmomente können dabei, wie in der DE 10 2006 003 264 A1 zur Steigerung der Genauigkeit subtrahiert werden, so dass sich der Wechselanteil des Gasmomentes $\tilde{M}_G$ nach

$$\widetilde{M}_G = J(\varphi)\ddot{\varphi}_{KW,mess} + \frac{1}{2}\frac{dJ(\varphi)}{d\varphi}\dot{\varphi}_{KW,mess}{}^2 - \sum \widetilde{M}_{extern} \text{ ergibt.}$$

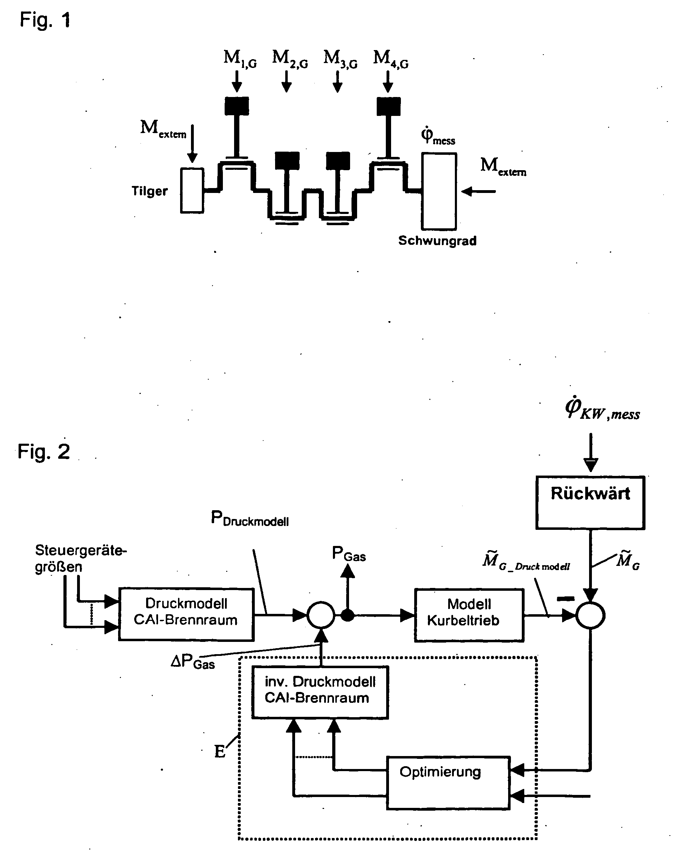

In Figur 1 ist eine Prinzipdarstellung eines Kurbeltriebes mit den angreifenden internen und externen Momenten dargestellt. Auf eine Kurbelwelle wirken vier Kolben ein, wobei jeder ein Summengasmoment $M_{1-4,G}$ auf die Kurbelwelle aufbringt (interne Momente). Vorzugsweise am Schwungrad ist ein Inkrementalgeber ausgeführt - nicht dargestellt -, welcher mit einem zugehörigen Sensor die Drehbewegung der Kurbelwelle misst. An die Kurbelwelle greifen dabei nachfolgend weitere, externe Momente $M_{extern}$ an, welche bei der Berechnung des Wechselanteils des Gasmomentes $\widetilde{M}_G$ berücksichtigt werden können. Figur 2 zeigt die erfindungsgemäße Modellstruktur zur Berechnung eines Zylinderinnendrucks $P_{Gas}$. Eingangsgrößen eines Druckmodells für einen CAI-Brennraum sind dabei im Steuergerät vorhandene Mess- oder Modellgrößen. Das Druckmodell kann dabei durch eine geeignete Modellstruktur, beispielsweise ein fraktales Brennraummodell gebildet werden. Ein solches Modell ist in SAE 2005-01-1120, 2005 "Validation of a Fractal Combustion Model through Flame Imaging" von Bozza F., Gimelli A., Merola S.S., Vaglieco B.M. vorgestellt. Dieses Modell ist für eine fortschreitende Flammfront gebildet und wird für den CA-Betrieb für eine homogene Kompressionszündung angepasst. Eine weitere Möglichkeit bilden im Prüfstandbetrieb parametrierte Kennfelder. Die Eingangsgrößen sind dafür wenigstens der Kurbelwinkel, der Saugrohrdruck als Lastäquivalent sowie die Drehzahl der Brennkraftmaschine. Am Ausgang des Druckmodells CAI-Brenraum steht ein erster modellierter, kurbelwinkelabhängiger Druck $P_{Druckmodell}$ zur Verfügung, der von einem Druckkorrekturwert $\Delta P_{Gas}$ zum gesuchten modellierten Zylinderinnendruck $P_{Gas}$ korrigiert wird. Der Druckkorrekturwert $\Delta P_{Gas}$ entstammt einer Beobachterstruktur B. Zur Bildung des Druckkorrekturwertes $\Delta P_{Gas}$ wird der Zylinderinnendruck $P_{Gas}$ einem Modell des Kurbeltriebes als Eingangsgröße aufgeschalten. Das Kurbeltriebsmodell beinhaltet die bekannten geometrischen kurbelwinkelabhängigen Zuordnungen vom Kolben über das Pleuel auf die Kurbelwelle und mit deren weiterhin bekannten Trägheitsmomenten lässt sich aus dem kurbelwinkelabhängig modellierten Zylinderinnendruck $P_{Gas}$ ein von diesem herrührendes Gaswechselmoment $\widetilde{M}_{G\_Druckmodell}$ berechnen. Dieser Wert wird von dem Wechselanteil des Gasmomentes, welches über die Drehungleichförmigkeit aus den Messwerten der Winkelgeschwindigkeit $\dot{\varphi}_{KW,mess}$ und der Winkelbeschleunigung $\ddot{\varphi}_{KW,mess}$ - siehe Gl. 2 - berechnet wird, subtrahiert. Diese Modellierung wird hierbei als Rückwärtsmodell bezeichnet, da von der Wirkung - der Drehungleichförmigkeit - auf die Ursache - den Wechselanteil des Gasmomentes - rückgerechnet wird. Die Abweichung ist Eingangsgröße des Beobachters B, wobei sich hier die Ungenauigkeit bzw. Abweichung des modellierten Zylinderinnendrucks $P_{Gas}$ vom realen Brennraumdruck wiederspiegelt. Auf Basis einer Optimierung erfolgt eine Adaption des Druckmodells CAI-Brennraum und die Berechnung des Druckkorrekturwertes $\Delta P_{Gas}$. Dem Beobachter können weitere Eingangsgrößen E, welche Betriebs- bzw. Zustandsgrößen der Brennkraftmaschine z. B. Kurbelwinkel Last und Drehzahl kennzeichnen, anliegen. Der Beobachter enthält ein inverses Modelld des CAI-Druckmodells, dessen Parameter auf Basis der Abweichung adaptiert werden.

**Bezugszeichenliste**

| | |
|---|---|
| $J(\varphi)$ | kurbelwinkelabhängiges Massenträgheitsmoment |
| $\varphi_{KW}$ | Winkellage der Kurbelwelle (allg.) |
| $\varphi_{KW,mess}$ | gemessene Winkellage der Kurbelwelle |
| $\dot{\varphi}_{KW,mess}$ | Gemessene Winkelgeschwindigkeit an der Kurbelwelle |
| $\ddot{\varphi}_{KW,mess}$ | Gemessene Winkelbeschleunigung an der Kurbelwelle |
| $\widetilde{M}_G$ | Wechselanteil des Gasmomentes, aus der Drehungleichförmigkeit berechnet |
| $\widetilde{M}_{G\_Druck\,model\,l}$ | Gaswechselmoment, aus dem Druckmodell berechnet |
| $\bar{M}_G$ | Gleichanteil des Gasmomentes |
| $\bar{M}_R$ | Reibungsdrehmoment |
| $\bar{M}_L$ | Lastmoment an der Kurbelwelle |
| $\Sigma M_{extern}$ | Summe der externen Momente |
| $M_{Gas}$ | Summengasmoment |
| $P_{Druckmodell}$ | modellierter Zylinderinnendruck |
| $\Delta P_{Gas}$ | Druckkorrekturwert |
| $P_{Gas}$ | Zylinderinnendruck aus $P_{Druckmodell} - \Delta P_{Gas}$ korrigiert |
| E | weitere Eingangsgrößen Beobachterstruktur |

**Patentansprüche**

1. Verfahren zum Bestimmen des Zylinderinnendrucks ($P_{Gas}$) einer Brennkraftmaschine, aus einem Zylinderdruckmodell mit wenigstens den Eingangsgrößen Last, Drehzahl und Kurbelwinkel, wobei ein kurbelwinkelabhängiger Druckwert im Zylinder ($P_{Druckmodell}$) berechnet wird, der mit einem Druckkorrekturwert ($\Delta P_{Gas}$) korrigiert den Zylinderinnendruck ($P_{Gas}$) bildet, wobei der Druckkorrekturwert ($\Delta P_{Gas}$) aus einer Betrachtung der Wechselmomente an der Kurbelwelle gebildet wird, indem:

   - aus dem Zylinderinnendruck ($P_{Gas}$) als Eingangsgröße eines Modells des Kurbeltriebes ein an der Kurbelwelle auftretendes Gaswechselmoment $\tilde{M}_{G\_Druck\,mod\,ell}$, welches auf Basis des Zylinderinnendrucks ($P_{Gas}$) berechnet wird, gebildet wird,
   - aus einem durch Berechnung des kurbelwinkelabhängigen Trägheitsmoments ($J(\varphi)$) und der gemessenen Winkelgeschwindigkeit ($\dot{\varphi}_{KW\,,mess}$) sowie der Winkelbeschleunigung ($\ddot{\varphi}_{KW,mess}$) an der Kurbelwelle der Wechselanteil des Gasmomentes ($\tilde{M}_G$) nach $\tilde{M}_G = J(\varphi)\ddot{\varphi}_{KW,mess} + \dfrac{1}{2}\dfrac{dJ(\varphi)}{d\varphi}\dot{\varphi}^2_{KW,mess}$ aus der Drehungleichförmigkeit berechnet wird,
   - und aus der Differenz des Gaswechselmoments aus dem Druckmodell $\tilde{M}_{G\_Druck\,mod\,ell}$ und dem Wechselanteil des Gasmomentes ($\tilde{M}_G$) aus der Drehungleichförmigkeit der Korrekturwert ($\Delta P_{Gas}$) ermittelt wird.

2. Verfahren nach Anspruch 1
   **dadurch gekennzeichnet, dass** die Differenz des Gaswechselmoments ($\tilde{M}_{G\_Druck\,mod\,ell}$) aus dem Druckmodell und dem Wechselanteil des Gasmomentes ($\tilde{M}_G$) aus der Drehungleichförmigkeit an einer Beobachterstruktur (B) anliegt, welche ein inverses Druckmodell des Brennraums enthält, und dass das Druckmodellauf Basis der ermittelten Differenz adaptiert wird.

3. Verfahren nach Anspruch 1,
   **dadurch gekennzeichnet,**
   **dass** mit dem am Kolben wirkenden modellierten Zylinderinnendruck ($P_{Gas}$) auf Basis der bekannten geometrischen Beziehungen vom Kolben über das Pleuel auf die Kurbelwelle und mit dem bekannten Trägheitsmoment der Kurbelwelle ein aus dem Druckmodell stammendes, an der Kurbelwelle angreifendes, Gaswechselmoment ($\tilde{M}_{G\_Druck\,mod\,ell}$) ermittelt wird.

4. Verfahren nach einem der vorhergehenden Ansprüche,
   **dadurch gekennzeichnet,**
   **dass** der modellierte Zylinderinriendruck ($P_{Gas}$) zur Beurteilung des Brennverfahrens und als Eingangsgröße einer Brennverfahrenssteuerung genutzt wird.

5. Verfahren nach Anspruch 4
   **dadurch gekennzeichnet,**
   **dass** der modellierte Zylinderinnendruck ($P_{Gas}$) zur Beurteilung der Verfahrensgrenze einer mit homogener Kompressionszündung betriebenen Verbrennungskraftmaschine genutzt wird, indem ein Verlassen der Betriebsart "homogener Kompressionszündung" durch einen überproportionalen Anstieg des Brennraumdruckgradienten beim Anfetten des Brennstoff-Gasgemisches erkannt wird.

6. Verfahren nach Anspruch 5,
   **dadurch gekennzeichnet, dass**
   die ermittelten Druckgradienten mit einem Schwellwert verglichen werden, und bei Überschreiten dieses Schwellwertes eine Reduzierung der Kraftstoffmenge oder eine Umschaltung in eine andere, vorzugsweise fremdgezündete Betriebsart, erfolgt.

**Claims**

1. A method for determining cylinder interior pressure ($P_{gas}$) of an internal combustion engine from a cylinder pressure model having input variables comprising at least load, speed of rotation and crank angle whereby a crank-angle-dependent pressure value in the cylinder ($P_{pressure\,model}$) is calculated, which forms a cylinder interior pressure

($P_{gas}$) when corrected with a pressure correction value ($\Delta P_{gas}$), said pressure correction value ($\Delta P_{gas}$) being formed from an observation of alternating moments at a crankshaft, the method comprising the following steps:

- calculating a gas alternating moment $\widetilde{M}_{G\_pressure\ model}$ that occurs at the crankshaft, on the basis of the cylinder interior pressure ($P_{gas}$), said gas alternating moment being formed from cylinder interior pressure ($P_{gas}$) as the input variable of a model of a crank drive;

- calculating an alternating component of the gas moment ($\widetilde{M}_G$) according to

$$\widetilde{M}_G = J(\varphi)\ddot{\varphi}_{KW,meas} + \frac{1}{2}\frac{dJ(\varphi)}{d\varphi}\dot{\varphi}^2_{KW,meas}$$ , from non-uniformity of rotation, by means of calculating a crank-angle-dependent moment of inertia ($J(\varphi)$) and a measured angular velocity ($\dot{\varphi}_{KW,meas}$) as well as an angular acceleration ($\ddot{\varphi}_{KW,meas}$) at the crankshaft; and
- determining a correction value ($\Delta P_{gas}$) from a difference of the gas alternating moment from a pressure model $\overline{M}_{G\_pressure\ model}$ and the alternating component of the gas moment ($\widetilde{M}_G$), from non-uniformity of rotation.

2. A method according to claim 1, wherein the difference of the gas alternating moment ($\widetilde{M}_{G\_pressure\ model}$) from the pressure model and the alternating component of the gas moment ($\widetilde{M}_G$) from the non-uniformity of rotation is applied to an observer structure (B) that contains an inverse pressure model of the combustion chamber, and wherein the pressure model is adapted on the basis of the difference that is determined.

3. A method according to claim 1, wherein the gas alternating moment ($\widetilde{M}_{G\_pressure\ model}$) derived from the pressure model, which engages on the crankshaft, is determined with the modeled cylinder interior pressure ($P_{gas}$), on the basis of known geometric relationships of a piston on the crankshaft, by way of a connecting rod, and with a known moment of inertia of the crankshaft.

4. A method according to claim 1, wherein the modeled cylinder interior pressure ($P_{gas}$) is used to assess a combustion process and as an input variable of a combustion process control.

5. A method according to claim 4, wherein the modeled cylinder interior pressure ($P_{gas}$) is used to assess a process limit of an internal combustion engine operated with homogeneous compression ignition, wherein a departure from an operating mode of "homogeneous compression ignition" is recognized by a disproportional increase in a combustion chamber pressure gradient when a fuel/gas mixture becomes richer.

6. A method according to claim 5, wherein the pressure gradients that are determined are compared with a threshold value, and if this threshold value is exceeded, a reduction in the amount of fuel or a switch to a different mode of operation takes place.

**Revendications**

1. Procédé pour déterminer la pression interne d'un cylindre ($P_{Gas}$) d'un moteur à combustion interne, à partir d'un modèle de pression de cylindre avec au moins les valeurs d'entrée de charge, régime et angle de vilebrequin, une valeur de pression dépendant de l'angle de vilebrequin ($P_{Druckmodell}$) étant calculée dans le cylindre, et formant la pression interne du cylindre ($P_{Gas}$) une fois corrigée avec une valeur de correction de pression ($\Delta P_{Gas}$), la valeur de correction de pression ($\Delta P_{Gas}$) étant formée à partir d'une considération des fluctuations de couple au niveau du vilebrequin, par les mesures suivantes :

- à partir de la pression interne du cylindre ($P_{Gas}$) en tant que valeur d'entrée d'un modèle d'entraînement de vilebrequin, on forme un couple de fluctuation de gaz $\widetilde{M}_{G\_Druckmodell}$ produit sur le vilebrequin, qui est calculé sur la base de la pression interne du cylindre ($P_{Gas}$),
- à partir de celui-ci, en calculant le couple d'inertie ($J(\varphi)$) dépendant de l'angle de vilebrequin et la vitesse angulaire mesurée ($\dot{\varphi}_{KW,\ mess}$), ainsi que l'accélération angulaire ($\ddot{\varphi}_{KW,\ mess}$) au niveau du vilebrequin, on calcule la proportion de fluctuation du couple de gaz ($\widetilde{M}_G$) selon $\widetilde{M}_G = J(\varphi)\ddot{\varphi}_{KW,\ mess} + \frac{1}{2}(dJ(\varphi)/d\varphi)\ \ddot{\varphi}^2_{Kw,mess}$ à partir des fluctuations de régime,
- et à partir de la différence des fluctuations de couple de gaz obtenues par le modèle de pression $\widetilde{M}_{G\_Druckmodell}$

et de la proportion de fluctuation du couple de gaz ($\tilde{M}_G$), on détermine la valeur de correction ($\Delta P_{Gas}$).

2. Procédé selon la revendication 1, **caractérisé en ce que** la différence de fluctuation du couple de gaz ($\tilde{M}_{G\_Druckmodell}$) à partir du modèle de pression et de la proportion de fluctuation du couple de gaz ($\tilde{M}_G$) à partir des fluctuations de régime s'applique à une structure d'observateur (B) qui contient un modèle de pression inverse de la chambre de combustion, et **en ce que** le modèle de pression est adapté sur la base de la différence déterminée.

3. Procédé selon la revendication 1,
**caractérisé en ce que** l'on détermine une fluctuation de couple de gaz ($\tilde{M}_{G\_Druckmodell}$) s'exerçant sur le vilebrequin, provenant du modèle de pression, avec la pression interne du cylindre ($P_{Gas}$) modélisée agissant sur le piston, sur la base des rapports géométriques connus du piston par rapport à la bielle sur le vilebrequin et avec le couple d'inertie connu du vilebrequin.

4. Procédé selon l'une quelconque des revendications précédentes,
**caractérisé en ce que** la pression interne du cylindre ($P_{Gas}$) modélisée est utilisée pour analyser le procédé de combustion et en tant que valeur d'entrée d'une commande du procédé de combustion.

5. Procédé selon la revendication 4,
**caractérisé en ce que**
la pression interne du cylindre ($P_{Gas}$) modélisée est utilisée pour analyser la limite de procédé d'un moteur à combustion interne fonctionnant avec un allumage par compression homogène, en reconnaissant que l'on a quitté un mode de fonctionnement à "allumage par compression homogène" par une augmentation surproportionnelle des gradients de pression dans la chambre de combustion en cas d'enrichissement du mélange gaz/combustible.

6. Procédé selon la revendication 5,
**caractérisé en ce que** les gradients de pression déterminés sont comparés à une valeur seuil et en cas de dépassement de cette valeur seuil, on effectue une réduction de la quantité de carburant ou une commutation à un autre mode de fonctionnement, de préférence à allumage par étincelle.

## Fig. 1

$M_{1,G}$  $M_{2,G}$  $M_{3,G}$  $M_{4,G}$

$M_{extern}$

$\dot{\varphi}_{mess}$

$M_{extern}$

Tilger

Schwungrad

## Fig. 2

$\dot{\varphi}_{KW,mess}$

Rückwärt

$P_{Druckmodell}$

Steuergerätegrößen

$P_{Gas}$

$\tilde{M}_{G\_Druckmodell}$    $\tilde{M}_G$

Druckmodell
CAI-Brennraum

Modell
Kurbeltrieb

$\Delta P_{Gas}$

inv. Druckmodell
CAI-Brennraum

E

Optimierung

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4445684 A1
- DE 19931985 A1
- DE 10256106 A1
- WO 9322648 A1
- DE 102006003264 A1
- WO 2005011120 A

### In der Beschreibung aufgeführte Nicht-Patentliteratur

- **VON FEHRENBACH ; W. HELD ; F. ZUTHER.** Drehmomentenbestimmung bei Verbrennungsmotoren durch Auswertung der Kurbelwellengeschwindigkeit. *MTZ Motorentechnische Zeitschrift,* Mai 1998